(19) **Europäisches Patentamt**
**European Patent Office**
**Office européen des brevets**

(11) **EP 4 668 615 A1**

(12) **EUROPEAN PATENT APPLICATION**
published in accordance with Art. 153(4) EPC

(43) Date of publication:
**24.12.2025 Bulletin 2025/52**

(21) Application number: **24766479.0**

(22) Date of filing: **06.03.2024**

(51) International Patent Classification (IPC):
**H04B 7/185** (2006.01)

(52) Cooperative Patent Classification (CPC):
**H04B 7/185; H04W 24/02; H04W 48/16**

(86) International application number:
**PCT/CN2024/080373**

(87) International publication number:
**WO 2024/183764 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.03.2023 CN 202310247194**

(71) Applicant: **Huawei Technologies Co., Ltd.**
**Shenzhen, Guangdong 518129 (CN)**

(72) Inventors:
• **HAN, Zhilin**
  **Shenzhen, Guangdong 518129 (CN)**
• **ZHU, Haoren**
  **Shenzhen, Guangdong 518129 (CN)**
• **CHEN, Weimin**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD, COMMUNICATION APPARATUS AND COMMUNICATION SYSTEM**

(57) This application provides a communication method, a communication apparatus, and a communication system. The method includes: determining, based on ephemeris information of a satellite and service information of a first service on the satellite, at least one access network device that uses a frequency band overlapping with a frequency band used by the satellite to perform the first service; and sending indication information to one or more of the at least one access network device, where the indication information indicates to reduce interference to the satellite, to enable a first aggregate interference value of the at least one access network device to the satellite to be less than or equal to a first threshold. In this solution, when the satellite performs the first service, if there is an access network device that causes interference to the satellite, the access network device may be indicated to reduce interference to the satellite, to ensure service quality when the satellite performs the first service.

```
┌──────────┐                              ┌──────────────┐
│  First   │                              │Access network│
│  device  │                              │    device    │
└────┬─────┘                              └──────┬───────┘
     │                                           │
┌────┴──────────┐                                │
│301: Determine at│                              │
│least one access │                              │
│network device   │                              │
└────┬──────────┘                                │
     │                                           │
     │─────── 302: Indication information ──────>│
     │                                           │
```

FIG. 3

# Description

## CROSS-REFERENCE TO RELATED APPLICATIONS

This application claims priority to Chinese Patent Application No. 202310247194.4, filed with the China National Intellectual Property Administration on March 8, 2023 and entitled "COMMUNICATION METHOD, COMMUNICATION APPARATUS, AND COMMUNICATION SYSTEM", which is incorporated herein by reference in its entirety.

## TECHNICAL FIELD

This application relates to the field of wireless communication technologies, and in particular, to a communication method, a communication apparatus, and a communication system.

## BACKGROUND

With development of communication technologies, a satellite is applied more widely. The satellite transmits a signal to the surface of the Earth and obtains a processing result by processing a transmitted signal that is received. For example, in an application scenario of satellite sounding, a satellite transmits a microwave signal to the ground, receives a microwave signal reflected within a beam range, and then processes the received microwave signal to obtain an image.

Because a large quantity of ground access network devices (for example, ground base stations) are deployed on the ground, when the satellite transmits a signal, the ground access network devices also transmit signals, and the signals transmitted by the ground access network devices may cause interference to a receiver of the satellite. Consequently, the satellite cannot normally collect a reflected signal, affecting service quality when the satellite performs a service.

## SUMMARY

This application provides a communication method, a communication apparatus, and a communication system, to improve service quality when a satellite performs a service.

According to a first aspect, an embodiment of this application provides a communication method, applied to a first device or a module (for example, a chip) in the first device. The method includes: determining, based on ephemeris information of a satellite and service information of a first service on the satellite, at least one access network device that uses a frequency band overlapping with a frequency band used by the satellite to perform the first service; and sending indication information to one or more of the at least one access network device, where the indication information indicates to reduce interference to the satellite, to enable a first aggregate interference value of the at least one access network device to the satellite to be less than or equal to a first threshold.

In the foregoing solution, when the satellite performs the first service, if there is an access network device that causes interference to the satellite, the access network device may be indicated to reduce interference to the satellite, to ensure service quality when the satellite performs the first service.

In a possible implementation method, before the indication information is sent to the one or more of the at least one access network device, it is determined that a second aggregate interference value of the at least one access network device to the satellite is greater than the first threshold.

In the foregoing solution, when the second aggregate interference value of the at least one access network device to the satellite is greater than the first threshold, selection of an access network device from which interference needs to be reduced is triggered, instead of selecting, in any case, the access network device from which interference needs to be reduced. Therefore, resource overheads can be reduced.

In a possible implementation method, the method further includes: determining an interference value of each of the at least one access network device to the satellite based on interference calculation information of the at least one access network device and interference calculation information of the satellite; and determining the second aggregate interference value based on the interference value of each of the at least one access network device to the satellite.

In the foregoing solution, the interference calculation information of the access network device and the interference calculation information of the satellite are used, so that the aggregate interference value of the access network device to the satellite can be accurately determined.

In a possible implementation method, the method further includes: obtaining the interference calculation information of the satellite from a satellite control center.

In the foregoing solution, the interference calculation information of the satellite can be accurately obtained.

In a possible implementation method, the method further includes: obtaining the interference calculation information of the at least one access network device from the at least one access network device.

In the foregoing solution, the interference calculation information of the access network device can be accurately obtained.

In a possible implementation method, the interference calculation information of the satellite includes one or more of the following information: an antenna receive gain of the satellite, propagation loss information of the satellite, or an antenna polarization manner of the satellite.

In a possible implementation method, the interference calculation information of the at least one access network device includes one or more of the following information: an antenna polarization manner of the at least one access network device, an antenna transmit power of the at least one access network device, or an antenna transmit gain of the at least one access network device.

In a possible implementation method, the service information includes location information and/or time information corresponding to the first service, where the location information indicates a geographical range for performing the first service, and the time information indicates a time range for performing the first service.

In a possible implementation method, the one or more access network devices include a first access network device, and the indication information specifically indicates the first access network device to reduce a transmit power.

In the foregoing solution, interference to the satellite can be reduced when it is ensured that the first access network device can continue to work.

In a possible implementation method, the one or more access network devices include a second access network device, and the indication information specifically indicates the second access network device to change a used frequency band.

In the foregoing solution, the second access network device changes the used frequency band, so that interference to the satellite can be quickly reduced.

In a possible implementation method, the one or more access network devices include a third access network device, and the indication information specifically indicates the third access network device to stop working.

In the foregoing solution, the third access network device stops working, so that interference to the satellite can be quickly reduced.

According to a second aspect, an embodiment of this application provides a communication apparatus. The communication apparatus may be a first device or a module (for example, a chip) used in the first device. The first device may be a network device, a cloud server, or a device of another type. A type of the first device is not limited in this application. The communication apparatus has a function of implementing any one of the implementation methods of the first aspect. The function may be implemented by hardware, or may be implemented by hardware executing corresponding software. The hardware or the software includes one or more modules corresponding to the function.

According to a third aspect, an embodiment of this application provides a communication apparatus, including a processor coupled to a memory. The processor is configured to invoke a program stored in the memory, to perform any one of the implementation methods of the first aspect. The memory may be located inside or outside the communication apparatus. In addition, there may be one or more processors.

According to a fourth aspect, an embodiment of this application provides a communication apparatus, including a processor and a memory. The memory is configured to store computer instructions, and when the communication apparatus is run, the processor executes the computer instructions stored in the memory, to enable the communication apparatus to perform any one of the implementation methods of the first aspect.

According to a fifth aspect, an embodiment of this application provides a communication apparatus, including a unit or a means (means) used to perform steps of any one of the implementation methods of the first aspect.

According to a sixth aspect, an embodiment of this application provides a communication apparatus, including a processor and an interface circuit. The processor is configured to: communicate with another apparatus through the interface circuit, and perform any one of the implementation methods of the first aspect. There are one or more processors.

According to a seventh aspect, an embodiment of this application further provides a computer-readable storage medium. The computer-readable storage medium stores instructions, and when the instructions are run on a communication apparatus, any one of the implementation methods of the first aspect is performed.

According to an eighth aspect, an embodiment of this application further provides a computer program product. The computer program product includes a computer program or instructions. When the computer program or the instructions are run by a communication apparatus, any one of the implementation methods of the first aspect is performed.

According to a ninth aspect, an embodiment of this application further provides a chip system, including: a processor, configured to perform any one of the implementation methods of the first aspect.

According to a tenth aspect, an embodiment of this application further provides a communication system, including an access network device and a first device configured to perform any one of the methods of the first aspect. The access network device is configured to receive indication information from the first device, where the indication information indicates to reduce interference to a satellite.

According to an eleventh aspect, an embodiment of this application further provides a communication method, including: A first device determines, based on ephemeris information of a satellite and service information of a first service on the satellite, at least one access network device that uses a frequency band overlapping with a frequency band used by the satellite to perform the first service, and sends indication information to one or more of the at least one access network device, where the indication information indicates to reduce interference to the satellite, to enable a first aggregate interference value of the at least one access network device to the satellite to be less than or equal to a first threshold.

The one or more access network devices receive the indication information from the first device.

BRIEF DESCRIPTION OF DRAWINGS

    FIG. 1 is a diagram of a communication system according to an embodiment of this application;
    FIG. 2(a) is a diagram of a 5G network architecture based on a service-based architecture;
    FIG. 2(b) is a diagram of a 5G network architecture based on a point-to-point interface;
    FIG. 3 is a schematic flowchart of a communication method according to an embodiment of this application;
    FIG. 4 is an example diagram of signal interference according to an embodiment of this application;
    FIG. 5 is a schematic flowchart of a communication method according to an embodiment of this application;
    FIG. 6 is a schematic flowchart of a communication method according to an embodiment of this application;
    FIG. 7 is a schematic flowchart of a communication method according to an embodiment of this application;
    FIG. 8 is a diagram of a communication apparatus according to an embodiment of this application; and
    FIG. 9 is a diagram of a communication apparatus according to an embodiment of this application.

DESCRIPTION OF EMBODIMENTS

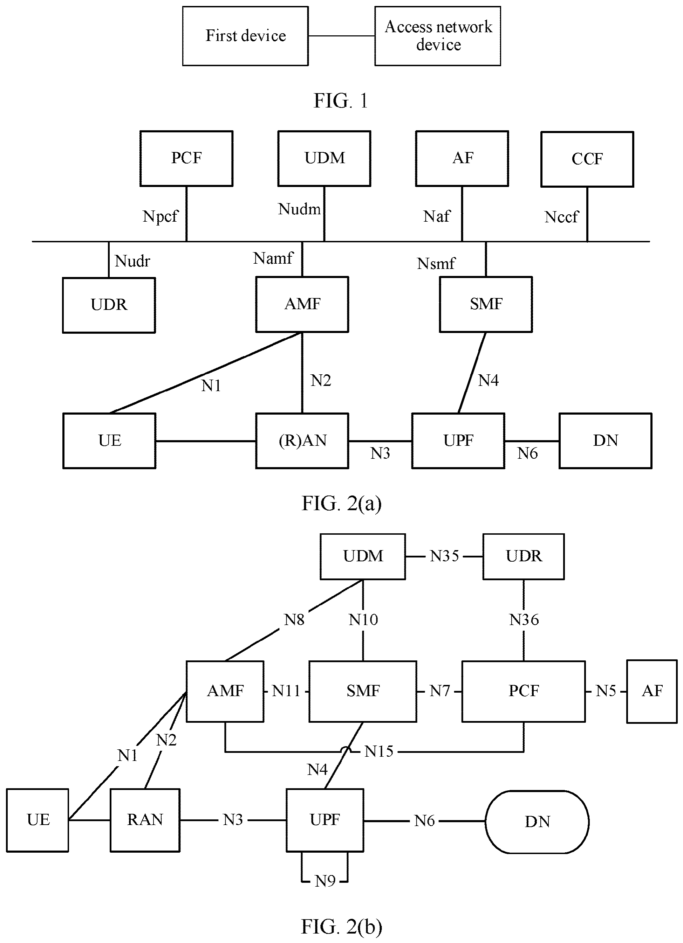

To improve service quality when a satellite performs a service, this application provides a communication system. Refer to FIG. 1. The system includes a first device and an access network device.

The system shown in FIG. 1 may be used in a 5G network architecture shown in FIG. 2(a) or FIG. 2(b), or certainly, may be used in a future network architecture, for example, a 6th generation (6th generation, 6G) network architecture. This is not limited in this application.

The first device in FIG. 1 may be a core network element (for example, a session management function (session management function, SMF) network element, an access and mobility management function (access and mobility management function, AMF) network element, a network exposure function (network exposure function, NEF) network element, an application function (application function, AF) network element, or a coexistence control function (coexistence control function, CCF) network element) in FIG. 2(a) or FIG. 2(b), or may be a network element that has a function of the core network element in future communication such as 6G communication. This is not limited in this application.

The first device in FIG. 1 may alternatively be a network management device. The network management device may be a network management system (network management system, NMS) device, an element management system (element management system, EMS) device, or the like. This is not limited in this application.

The first device in FIG. 1 may alternatively be a cloud server, a third-party service device, or a device of another type. A specific implementation of the first device is not limited in this application.

The first device is configured to: determine, based on ephemeris information of a satellite and service information of a first service on the satellite, at least one access network device that uses a frequency band overlapping with a frequency band used by the satellite to perform the first service, and send indication information to one or more of the at least one access network device, where the indication information indicates to reduce interference to the satellite, to enable a first aggregate interference value of the at least one access network device to the satellite to be less than or equal to a first threshold. The one or more access network devices are configured to receive the indication information from the first device.

In a possible implementation method, the first device is further configured to: determine, before sending the indication information to the one or more of the at least one access network device, that a second aggregate interference value of the at least one access network device to the satellite is greater than the first threshold.

In a possible implementation method, the first device is further configured to: determine an interference value of each of the at least one access network device to the satellite based on interference calculation information of the at least one access network device and interference calculation information of the satellite, and determine the second aggregate interference value based on the interference value of each of the at least one access network device to the satellite.

In a possible implementation method, the first device is further configured to obtain the interference calculation information of the satellite from a satellite control center.

In a possible implementation method, the first device is further configured to obtain the interference calculation information of the at least one access network device from the at least one access network device.

In a possible implementation method, the interference calculation information of the satellite includes one or more of the following information: an antenna receive gain of the satellite, propagation loss information of the satellite, or an antenna polarization manner of the satellite.

In a possible implementation method, the interference calculation information of the at least one access network device includes one or more of the following information: an antenna polarization manner of the at least one access network device, an antenna transmit power of the at least one access network device, or an antenna transmit gain of the at least one access network device.

In a possible implementation method, the service information includes location information and/or time information corresponding to the first service, where the location information indicates a geographical range for performing the first service, and the time information indicates a time range for performing the first service.

In a possible implementation method, the one or more access network devices include a first access network device, and the indication information specifically indicates the first access network device to reduce a transmit power.

In a possible implementation method, the one or more access network devices include a second access network device, and the indication information specifically indicates the second access network device to change a used frequency band.

In a possible implementation method, the one or more access network devices include a third access network device, and the indication information specifically indicates the third access network device to stop working.

For interaction between network elements in a system and specific execution, refer to the following method embodiments. Details are not described herein. To cope with challenges of wireless broadband technologies and maintain a leading advantage of a 3rd generation partnership project (3rd generation partnership project, 3GPP) network, the 3GPP standard group formulates a next generation mobile communication network system (next generation system) architecture, which is referred to as a 5G network architecture. The architecture supports access to a 5G core network (core network, CN) by using a radio access technology (for example, a long term evolution (long term evolution, LTE) access technology or a 5G radio access network (radio access network, RAN) access technology) defined by the 3GPP standard group, and also supports access to the core network by using a non-3GPP (non-3GPP) access technology through a non-3GPP interworking function (non-3GPP interworking function, N3IWF) or a next generation access gateway (next generation packet data gateway, ngPDG).

FIG. 2(a) is a diagram of a 5G network architecture based on a service-based architecture. The 5G network architecture shown in FIG. 2(a) may include an access network device and a core network device. A terminal device accesses a data network (data network, DN) through the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), an NEF network element (not shown in the figure), an AF network element, a policy control function (policy control function, PCF) network element, an AMF network element, an SMF network element, a user plane function (user plane function, UPF) network element, a binding support function (binding support function, BSF) network element (not shown in the figure), and a CCF network element.

The terminal device may be user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an urban air transport (for example, an uncrewed aerial vehicle or a helicopter), a ship, a robot, a mechanical arm, a smart home device, or the like.

The access network device may be a radio access network device (a RAN device) or a wired access network device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, a base station in a future mobile communication system, or a module or a unit that completes some functions of the base station, for example, a central unit (central unit, CU) or a distributed unit (distributed unit, DU). The untrusted non-3GPP access network device includes but is not limited to: an untrusted non-3GPP access gateway or an N3IWF device, an untrusted wireless local area network (wireless local area network, WLAN) access point (access point, AP), a switch, and a router. The trusted non-3GPP access network device includes but is not limited to: a trusted non-3GPP access gateway, a trusted WLAN AP, a switch, and a router. The wired access network device includes but is not limited to: a wireline access gateway (wireline access gateway), a landline phone network device, a switch, and a router.

The access network device and the terminal device may be at fixed locations, or may be movable. The access network device and the terminal device may be deployed on the land, including an indoor device, an outdoor device, a handheld device, or a vehicle-mounted device; or may be deployed on a water surface; or may be deployed on an airplane, a balloon, or an artificial satellite in the air. Application scenarios of the access network device and the terminal device are not limited in embodiments of this application.

The AMF network element includes functions such as mobility management or access authentication/authorization. In addition, the AMF network element is responsible for transferring a user policy between the terminal device and the PCF network element.

The CCF network element includes management and control functions of a shared device, and is responsible for determining an access network device that causes interference when a satellite performs a service, and determining an avoidance policy of the access network device for the satellite.

The SMF network element includes functions such as performing session management, executing a control policy delivered by the PCF network element, selecting the UPF network element, and allocating an internet protocol (internet protocol, IP) address to the terminal device.

The UPF network element includes completing functions such as user plane data forwarding, session/-flow-level-based charging statistics, and bandwidth limitation.

The UDM network element includes performing functions such as subscription data management or user access authorization.

The UDR includes functions such as performing storage and retrieval of subscription data, policy data, application data, or data of another type.

The NEF network element is configured to support capability and event exposure.

The AF network element transfers a requirement of an application side for a network side, for example, a QoS requirement or user status event subscription. The AF may be a third-party functional entity, or may be an application service deployed by an operator, for example, an IP multimedia subsystem (IP Multimedia Subsystem, IMS) voice call service. The AF network element includes an AF network element (namely, an AF network element of the operator) in a core network and a third-party AF network element (for example, an application server of an enterprise).

The PCF network element includes policy control functions such as performing charging at a session or service flow level, QoS bandwidth guarantee and mobility management, or policy decision-making for a terminal device. The PCF network element includes an access and mobility management policy control function (access and mobility management policy control function, AM PCF) network element and a session management policy control function (session management PCF, SM PCF) network element. The AM PCF network element is configured to formulate an AM policy and a user policy for the terminal device, and the AM PCF network element may also be referred to as a policy control function network element that provides a service for the terminal device (PCF for UE)). The SM PCF network element is configured to formulate a session management policy (session management policy, SM policy) for a session. The SM PCF network element may also be referred to as a policy control function network element that provides a service for a protocol data unit (protocol data unit, PDU) session (PCF for a PDU session).

The NRF network element may be configured to provide a network element discovery function, and provide, based on a request of another network element, network element information corresponding to a network element type. The NRF network element further provides a network element management service, for example, network element registration, update, deregistration, or network element status subscription and push.

The BSF network element may provide functions such as BSF service registration/deregistration/update, detection on a connection to the NRF network element, session binding information creation, obtaining information of a terminal device, and query for session binding information for duplicate IP addresses.

The AUSF network element is responsible for authenticating a user, to determine whether the user or a device is allowed to be connected to a network.

The DN is a network located outside an operator network. The operator network may access a plurality of DNs, and a plurality of services may be deployed on the DNs, to provide services such as data and/or a speech for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, and transmit, based on the instructions, collected sensor data to the control server and the like. For another example, the DN is an internal office network of a company, a mobile phone or a computer of an employee of the company may be a terminal device, and the mobile phone or the computer of the employee may access information, data resources, and the like of the internal office network of the company.

Npcf, Nudr, Nudm, Naf, Namf, and Nsmf in FIG. 2(a) are service-based interfaces respectively exhibited by the foregoing PCF, UDR, UDM, AF, AMF, and SMF, and are configured to invoke corresponding service-based operations. N1, N2, N3, N4, and N6 are interface sequence numbers. Meanings of these interface sequence numbers are as follows:

(1) N1 is an interface between the AMF network element and the terminal device, and may be configured to transfer non-access stratum (non-access stratum, NAS) signaling (for example, including a QoS rule from the AMF network element) and the like to the terminal device.

(2) N2 is an interface between the AMF network element and the access network device, and may be configured to transfer radio bearer control information and the like from a core network side to the access network device.

(3) N3 is an interface between the access network device and the UPF network element, and is mainly configured to transfer uplink and downlink user plane data between the access network device and the UPF network element.

(4) N4 is an interface between the SMF network element and the UPF network element, and may be configured to transfer information between a control plane and a user plane, including delivering a forwarding rule, a QoS rule, a traffic statistics rule, and the like from the control plane to the user plane, and reporting user plane information.

(5) N6 is an interface between the UPF network element and the DN, and is configured to transfer uplink and downlink user data flows between the UPF network element and the DN.

FIG. 2(b) is a diagram of a 5G network architecture based on a point-to-point interface. For descriptions of functions of network elements in the 5G network architecture, refer to descriptions of functions of corresponding network elements in FIG. 2(a). Details are not described again. A main difference between FIG. 2(b) and FIG. 2(a) lies in the following: An interface between control plane network elements in FIG. 2(a) is a service-based interface, and an interface between control plane network elements in FIG. 2(b) is a point-to-point interface.

In the architecture shown in FIG. 2(b), names and functions of interfaces between the network elements are as follows:

(1) For meanings of N1, N2, N3, N4, and N6 interfaces, refer to the foregoing descriptions.

(2) N5 is an interface between an AF network element and a PCF network element, and may be configured to deliver an application service request and report a network event.

(3) N7 is an interface between the PCF network element and an SMF network element, and may be configured to deliver control policies at a PDU session granularity and a service data flow granularity.

(4) N8 is an interface between an AMF network element and a UDM network element, and may be used by the AMF network element to obtain subscription data and authentication data that are related to access and mobility management from the UDM network element, and used by the AMF network element to register information related to terminal device mobility management, and the like with the UDM network element.

(5) N9 is a user plane interface between UPF network elements, and is configured to transfer uplink and downlink user data flows between the UPF network elements.

(6) N10 is an interface between the SMF network element and the UDM network element, and may be used by the SMF network element to obtain subscription data related to session management from the UDM network element, and used by the SMF network element to register information related to a terminal device session and the like with the UDM network element.

(7) N11 is an interface between the SMF network element and the AMF network element, and may be configured to: transfer PDU session tunnel information between an access network device and the UPF network element, transfer a control message sent to a terminal device, transfer radio resource control information sent to the access network device, and so on.

(8) N15 is an interface between the PCF network element and the AMF network element, and may be configured to deliver a terminal device policy and an access control related policy.

(9) N35 is an interface between the UDM network element and a UDR network element, and may be used by the UDM network element to obtain user subscription data information from the UDR network element.

(10) N36 is an interface between the PCF network element and the UDR network element, and may be used by the PCF network element to obtain policy related subscription data and application data related information from the UDR network element.

It may be understood that the foregoing network elements or functions may be network elements in a hardware device, or may be software functions run on dedicated hardware or virtualized functions instantiated on a platform (for example, a cloud platform). Optionally, the foregoing network elements or functions may be implemented by one device, or may be jointly implemented by a plurality of devices, or may be a functional module in one device. This is not specifically limited in embodiments of this application.

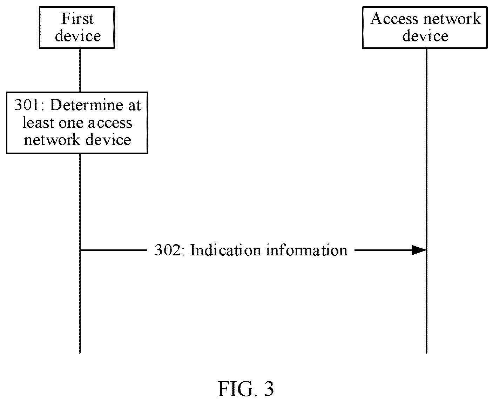

FIG. 3 is a schematic flowchart of a communication method according to an embodiment of this application. The method includes the following steps.

Step 301: A first device determines, based on ephemeris information of a satellite and service information of a first service on the satellite, at least one access network device that uses a frequency band overlapping with a frequency band used by the satellite to perform the first service.

The first device is the first device in the system shown in FIG. 1.

The ephemeris information of the satellite indicates information such as a flight track, a speed, or a direction of the satellite.

The service information of the first service includes location information and/or time information corresponding to the first service. The location information indicates a geographical range (for example, longitude and latitude, a country area, or a city area) in which the first service is performed. In other words, the first service is configured to be performed within the geographical range. The time information indicates a time range (for example, 8 a.m. to 9 a.m.) for performing the first service. In other words, the first service is configured to be performed within the time range.

In an implementation method, if current time is within the time range indicated by the time information corresponding to the first service, and/or a current location is within the geographical range indicated by the location information corresponding to the first service, it indicates that the satellite is preparing to perform or is performing the first service. In this case, the first device determines a current coverage range of the satellite based on the ephemeris information of the satellite and determines at least one access network device within the coverage range, where a frequency band used by the at least one access network device overlaps with a frequency band used by the satellite to perform the first service. The at least one access network device may cause interference to the first service on the satellite. The at least one access network device is a ground access network device.

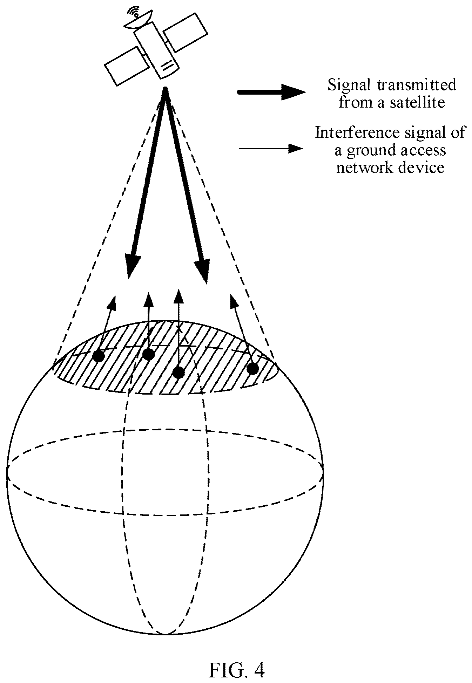

FIG. 4 is an example diagram of signal interference according to an embodiment of this application. For example, when the satellite performs the first service, there are 10 access network devices within the coverage range of the satellite, and frequency bands used by four of the 10 access network devices overlap with the frequency band used by the satellite to perform the first service. In this case, the at least one access network device determined by the first device includes the four access network devices.

Step 302: The first device sends indication information to one or more of the at least one access network device. Correspondingly, the one or more access network devices receive the indication information.

The indication information indicates to reduce interference to the satellite or indicates to avoid the satellite, to enable a first aggregate interference value of the at least one access network device to the satellite to be less than or equal to a first threshold.

The one or more access network devices are some or all of the at least one access network device. For example, if the at least one access network device determined by the first device in step 301 includes four access network devices, the first device may send, to some or all of the four access network devices, indication information that indicates to reduce interference to the satellite, so that after the interference is reduced, a first aggregate interference value of the four access network devices to the satellite is less than or equal to the first threshold.

In the foregoing solution, when the satellite performs the first service, if there is an access network device that causes interference to the satellite, the access network device may be indicated to reduce interference to the satellite, to ensure service quality when the satellite performs the first service.

In an implementation method, before step 302, the first device further determines that a second aggregate interference value of the at least one access network device to the satellite is greater than the first threshold. In other words, if the first device determines that the second aggregate interference value of the at least one access network device to the satellite is greater than the first threshold, the first device is triggered to perform step 302. If it is determined that the second aggregate interference value of the at least one access network device to the satellite is less than or equal to the first threshold, step 302 is not performed.

In an implementation method, the first device may determine an interference value of each of the at least one access network device to the satellite based on interference calculation information of the at least one access network device and interference calculation information of the satellite, and then determine the first aggregate interference value or the second aggregate interference value based on the interference value of each of the at least one access network device to the satellite.

For example, calculation of the second aggregate interference value is used as an example. It is assumed that the at least one access network device determined in step 301 includes an access network device 1, an access network device 2, an access network device 3, and an access network device 4. The first device determines an interference value 1 of the access network device 1 to the satellite based on interference calculation information of the access network device 1 and the interference calculation information of the satellite, determines an interference value 2 of the access network device 2 to the satellite based on interference calculation information of the access network device 2 and the interference calculation information of the satellite, determines an interference value 3 of the access network device 3 to the satellite based on interference calculation information of the access network device 3 and the interference calculation information of the satellite, and determines an interference value 4 of the access network device 4 to the satellite based on interference calculation information of the access network device 4 and the interference calculation information of the satellite, and then determines a second aggregate interference value of the four access network devices to the satellite based on the interference value 1, the interference value 2, the interference value 3, and the interference value 4. For example, a sum of the interference value 1, the interference value 2, the interference value 3, and the interference value 4 is used as the second aggregate interference value, or a weighted sum of the interference value 1, the interference value 2, the interference value 3, and the interference value 4 is used as the second aggregate interference value, or the second aggregate interference value is obtained based on the interference value 1, the interference value 2, the interference value 3, and the interference value 4 by using another method.

After some or all of the foregoing four access network devices reduce interference to the satellite, an aggregate interference value of the four access network devices is reduced from the second aggregate interference value to a first aggregate interference value, and the first aggregate interference value is less than or equal to the first threshold. A method for calculating the first aggregate interference value is similar to a method for calculating the second aggregate interference value. Details are not described again.

In an implementation method, the first device obtains the interference calculation information of the satellite from a satellite control center.

In another implementation method, the interference calculation information of the satellite is configured for the first device. For example, interference calculation information of different satellites is configured.

In another implementation method, the first device obtains the interference calculation information of the satellite from a network management device.

In an implementation method, the first device obtains the interference calculation information of the at least one access network device from the at least one access network device. For example, the first device obtains interference calculation information 1 of the access network device 1 from the access network device 1, obtains interference calculation information 2 of the access network device 2 from the access network device 2, obtains interference calculation information 3 of the access network device 3 from the access network device 3, and obtains interference calculation information 4 of the access network device 4 from the access network device 4.

In another implementation method, the first device obtains the interference calculation information of the at least one access network device from a network management device.

In an implementation method, the interference calculation information of the satellite includes one or more of the following information: an antenna receive gain of the satellite, propagation loss information of the satellite, or an antenna polarization manner of the satellite. The antenna polarization manner of the satellite may be circular polarization, elliptic polarization, linear polarization, or the like, and the antenna polarization manner of the satellite is used to calculate a polarization loss. The propagation loss information of the satellite includes at least one of a free space loss, an ionospheric loss, atmospheric attenuation, beam extension, or a clutter loss. The propagation loss information of the satellite is used to determine a propagation loss of the satellite, and the propagation loss of the satellite refers to a loss for transmitting a signal of an access network device to a satellite antenna (receiver). The free space loss of the propagation loss information of the satellite may be a specific value of the free space loss, or may be indication information indicating a method for calculating the free space loss. The ionospheric loss of the propagation loss information of the satellite may be a specific value of the ionospheric loss, or may be indication information indicating a method for calculating the ionospheric loss. The atmospheric attenuation of the propagation loss information of the satellite may be a specific value of the atmospheric attenuation, or may be indication information indicating a method for calculating the atmospheric attenuation. The beam extension of the satellite propagation loss information may be a specific value of the beam extension, or may be indication information indicating a method for calculating the beam extension. The clutter loss of the propagation loss information of the satellite may be a specific value of the clutter loss, or may be indication information indicating a method for calculating the clutter loss.

For example, the method for calculating the free space loss may be $FSPL(d, f_c) = 32.45 + 20 \log_{10}(f_c) + 20 \log_{10} d$. $FSPL(d, f_c)$ is the free space loss, $f_c$ is a transmit frequency of an access network device and may be understood as a midpoint of the frequency band used by the foregoing access network device, d is a distance between the satellite and the access network device, and d may be obtained by the first device through calculation and based on the ephemeris information of the satellite, location information of the access network device, and a radius of the Earth.

For example, empirical values may be used for the ionospheric loss, the atmospheric attenuation, the beam extension, and the clutter loss.

In an implementation method, the interference calculation information of the access network device includes one or more of the following information: an antenna polarization manner of the access network device, an antenna transmit power of the access network device, or an antenna transmit gain of the access network device. The antenna polarization manner of the access network device may be circular polarization, elliptic polarization, linear polarization, or the like, and the antenna polarization manner of the access network device is used to calculate a polarization loss.

In an implementation method, an example of a method for calculating an interference value I (Interference) of the access network device to the satellite is as follows:

$$ I = P_{tx} + G_{tx} - PL + G_{rx}; $$

$P_{tx}$ is the transmit power of the access network device, $G_{tx}$ is the transmit gain of the access network device, $G_{rx}$ is the receive gain of the satellite, and PL is the propagation loss of the satellite and the polarization loss of the satellite.

The following describes different implementation methods for the indication information in step 302.

In an implementation method 1, the one or more access network devices in step 302 include a first access network device, and the indication information specifically indicates the first access network device to reduce a transmit power.

In an implementation method, if the indication information includes a required power reduction, the first access network device reduces the power of the first access network device based on the required power reduction. For example, if a current transmit power of the first access network device is 100 Hz, and the required power reduction in the indication information is 10 Hz, the first device reduces the transmit power to 90 Hz.

In another implementation method, if the indication information includes a reduced power, the first access network device reduces the power of the first access network device based on the reduced power. For example, if a current transmit power of the first access network device is 100 Hz, and the reduced power in the indication information is 40 Hz, the first device reduces the transmit power to 40 Hz.

In another implementation method, if the indication information includes a power reduction percentage, the first access network device reduces the power of the first access network device based on the power reduction percentage. For example, if a current transmit power of the first access network device is 100 Hz, and the power reduction percentage in the indication information is 20%, the first device reduces the transmit power to 80 Hz.

In another implementation method, if the indication information includes a power reduction range, the first access network device reduces the power of the first access network device based on the power reduction range and a local policy. For example, if a current transmit power of the first access network device is 100 Hz, and the power reduction range in the indication information is 10 Hz to 20 Hz, the first device chooses, based on the local policy, to reduce the transmit power to a transmit power within a range of 80 Hz to 90 Hz.

In another implementation method, if the indication information indicates only that the transmit power needs to be reduced, but does not indicate a reduction value or range, the first access network device reduces the power of the first access network device based on the indication information and a local policy. For example, if a current transmit power of the first access network device is 100 Hz, the first device chooses, based on the indication information and the local policy, to reduce the transmit power to a transmit power lower than 100 Hz.

In an implementation method 2, the one or more access network devices in step 302 include a second access network device, and the indication information specifically indicates the second access network device to change a used frequency band.

That the indication information indicates the second access network device to change the used frequency band may also be understood as that the indication information indicates that a channel in a frequency band currently used by the second access network device is unavailable.

In an implementation method, the indication information includes information about a changed frequency band, and the second access network device updates, based on the information about the changed frequency band, the frequency band that is to be used by the second access network device to the changed frequency band. The information about the changed frequency band may be the changed frequency band or a range of changed frequency bands.

In another implementation method, the second access network device autonomously determines a changed frequency band based on the indication information, and updates the used frequency band to the changed frequency band.

After changing the frequency band, the second access network device reduces interference to the satellite performing the first service to 0, or reduces the interference to a very small value.

In an implementation method 3, the one or more access network devices in step 302 include a third access network device, and the indication information specifically indicates the third access network device to stop working.

After stopping working, the third access network device may start to work on an originally used frequency band again or switch to a frequency band for working after specified duration expires. Alternatively, after receiving a notification from the first device, the third access network device starts to work on the originally used frequency band again or switch to a frequency band for working.

It should be noted that the foregoing three implementation methods may be combined with each other. For example, the at least one access network device determined by the first device in step 301 includes four access network devices, which are respectively an access network device 1, an access network device 2, an access network device 3, and an access network device 4. The first device sends, to the access network device 1, indication information 1 indicating to reduce a transmit power, sends, to the access network device 2, indication information 2 indicating to change a used frequency band, and sends, to the access network device 3, indication information 3 indicating to stop working.

The following describes how the first device determines an access network device that is in the at least one access network device in step 302 and that needs to reduce a transmit power, change a used frequency, or stop working.

In an implementation method, after determining the at least one access network device that uses the frequency band overlapping with the frequency band used by the satellite to perform the first service, the first device sorts the transmit power of the at least one access network device in a value order. After the first device determines to remove N access network devices with highest transmit powers from the at least one access network device, an aggregate interference value of the remaining access network devices to the satellite is less than or equal to the first threshold, and the first device indicates, based on indication information, the N access network devices to reduce a transmit power to 0, stop working, or change a used frequency. N is a positive integer. For example, the at least one access network device determined by the first device in step 301 includes four access network devices, which are respectively an access network device 1, an access network device 2, an access network device 3, and an access network device 4, and transmit powers of the four access network devices are sequentially as follows in descending order: the access network device 1, the access network device 3, the access network device 2, and the access network device 4. If an aggregate interference value of the access network device 3, the access network device 2, and the access network device 4 to the satellite is less than or equal to the first threshold, the first device determines to indicate, based on indication information, the access network device 1 to reduce a transmit power to 0, stop working, or change a used frequency.

In another implementation method, after determining the at least one access network device that uses the frequency band overlapping with the frequency band used by the satellite to perform the first service, the first device reduces the transmit power of the at least one access network device based on a weight corresponding to each of the at least one access network device. If an aggregate interference value of the at least one access network device to the satellite is less than or equal to the first threshold after the transmit power is reduced, the first device indicates the at least one access network device to reduce the transmit power based on the corresponding weight. For example, the at least one access network device determined by the first device in step 301 includes four access network devices, which are respectively an access network device 1, an access network device 2, an access network device 3, and an access network device 4, and current transmit powers of the four access network devices are respectively P1, P2, P3, and P4. If the transmit power of the access network device 1 is reduced to P1*W1, the transmit power of the access network device 2 is reduced to P2*W2, the transmit power of the access network device 3 is reduced to P3*W3, the transmit power of the access network device 4 is reduced to P4*W4, and an aggregate interference value of the four access network devices to the satellite is less than or equal to the first threshold after the transmit powers are reduced, the first device sends, to the access network device 1, indication information 1 indicating to reduce the transmit power to P1*W1, sends, to the access network device 2, indication information 2 indicating to reduce the transmit power to P2*W2, sends, to the access network device 3, indication information 3 indicating to reduce the transmit power to P3*W3, and sends, to the access network device 4, indication information 4 indicating to reduce the transmit power to P4*W4. W1, W2, W3, and W4 are all positive numbers less than 1.

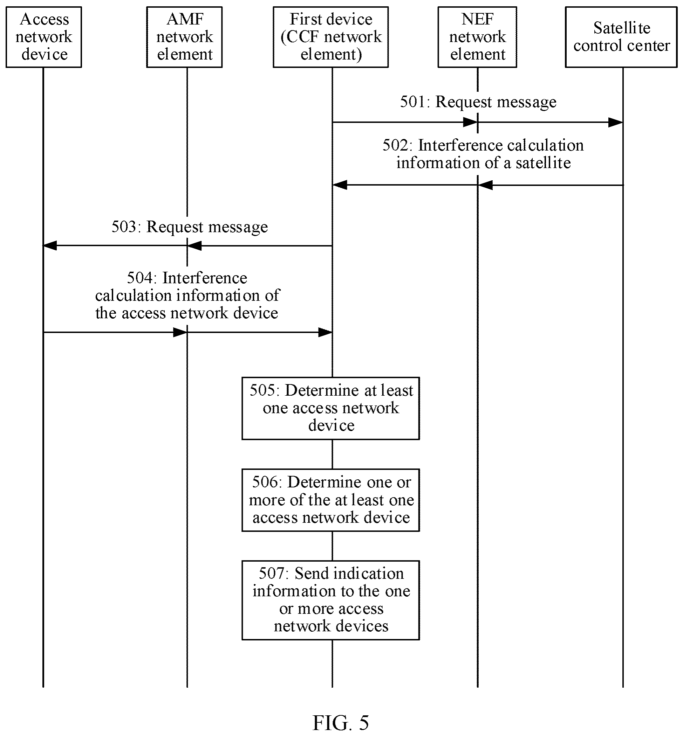

The following describes the foregoing embodiment in FIG. 3 with reference to specific embodiments in FIG. 5 to FIG. 7.

FIG. 5 is a schematic flowchart of a communication method according to an embodiment of this application. In the embodiment in FIG. 5, a first device is a CCF network element, that is, the CCF network element is used as the first device. The method includes the following steps.

Step 501: The CCF network element sends a request message to a satellite control center. Correspondingly, the satellite control center receives the request message.

The request message includes identification information of a satellite, and the request message is used to request to obtain interference calculation information of the satellite.

Specifically, the CCF network element sends the request message to the satellite control center through an NEF network element.

Step 502: The satellite control center sends the interference calculation information of the satellite to the CCF network element. Correspondingly, the CCF network element receives the interference calculation information of the satellite.

Specifically, the satellite control center sends the interference calculation information of the satellite to the CCF network element through the NEF network element. For specific content of the interference calculation information of the satellite, refer to the descriptions in the embodiment in FIG. 3.

In an implementation method, in step 502, the satellite control center further sends avoidance algorithm information to the CCF network element, and the avoidance algorithm information indicates to select an access network device for avoidance and an avoidance method. For a specific implementation of the avoidance algorithm information, refer to the descriptions in the embodiment in FIG. 3. For example, after access network devices are sorted based on transmit powers of the access network devices, an access network device that needs to perform avoidance may be selected, and then a power is correspondingly reduced or a frequency band is correspondingly changed, or a power of an access network device that may cause interference to the satellite performing a first service may be reduced based on a weight.

In another implementation method, the CCF network element obtains the avoidance algorithm information from a UDM network element or a UDR network element.

Step 503: The CCF network element sends a request message to an access network device. Correspondingly, the access network device receives the request message.

The request message is used to request to obtain interference calculation information of the access network device.

Specifically, the CCF network element sends the request message to the access network device through an AMF network element.

Step 504: The access network device sends the interference calculation information of the access network device to the CCF network element. Correspondingly, the CCF network element receives the interference calculation information of the access network device.

Specifically, the access network device sends the interference calculation information of the access network device to the CCF network element through the AMF network element. For specific content of the interference calculation information of the access network device, refer to the descriptions in the embodiment in FIG. 3.

There may be one or more access network devices in step 503 and step 504.

Step 505: The CCF network element determines, based on ephemeris information of the satellite and service information of the first service on the satellite, at least one access network device that uses a frequency band overlapping with a frequency band used by the satellite to perform the first service.

Step 505 is the same as step 301 in the foregoing embodiment in FIG. 3. Refer to the foregoing descriptions.

Step 506: The CCF network element determines one or more of the at least one access network device.

Specifically, the CCF network element determines an interference value of each of the at least one access network device to the satellite based on interference calculation information of the at least one access network device and the interference calculation information of the satellite. Then, the CCF network element determines an aggregate interference value of the at least one access network device to the satellite based on the interference value of each of the at least one access network device to the satellite. If the aggregate interference value is greater than a first threshold, the CCF network element selects one or more access network devices from the at least one access network device based on the avoidance algorithm information. After a transmit power of the one or more access network devices is adjusted, the aggregate interference value of the at least one access network device to the satellite is less than or equal to the first threshold.

Step 507: The CCF network element sends indication information to the one or more access network devices. Correspondingly, the one or more access network devices receive the indication information.

The indication information indicates to reduce interference to the satellite or indicates to avoid the satellite, to enable a first aggregate interference value of the at least one access network device to the satellite to be less than or equal to the first threshold.

For a specific implementation of step 507, refer to step 302 in the embodiment in FIG. 3.

For beneficial effects of the embodiment in FIG. 5, refer to the beneficial effects of the embodiment in FIG. 3. Details are not described again.

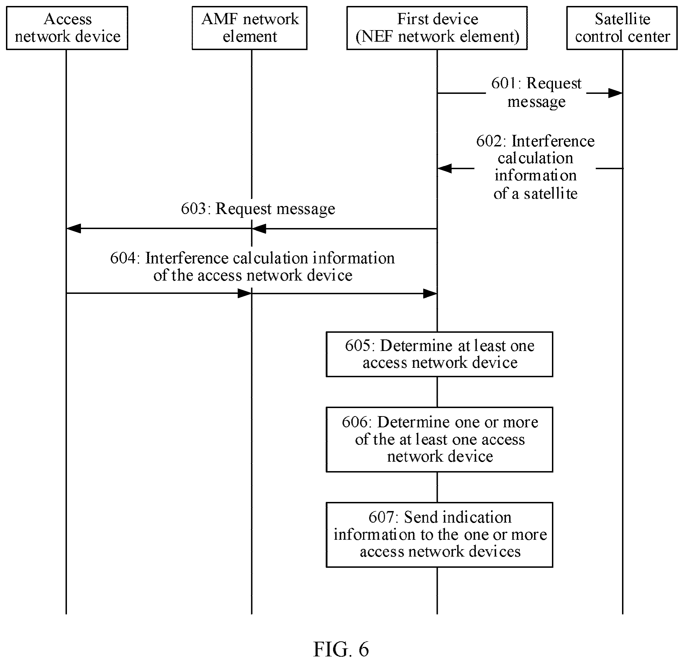

FIG. 6 is a schematic flowchart of a communication method according to an embodiment of this application. In the embodiment in FIG. 6, a first device is an NEF network element, that is, the NEF network element is used as the first device. The method includes the following steps.

Step 601: The NEF network element sends a request message to a satellite control center. Correspondingly, the satellite control center receives the request message.

The request message includes identification information of a satellite, and the request message is used to request to obtain interference calculation information of the satellite.

Step 602: The satellite control center sends the interference calculation information of the satellite to the NEF network element. Correspondingly, the NEF network element receives the interference calculation information of the satellite.

For specific content of the interference calculation information of the satellite, refer to the descriptions in the embodiment in FIG. 3.

In an implementation method, in step 602, the satellite control center further sends avoidance algorithm information to the NEF network element, and the avoidance algorithm information indicates to select an access network device for avoidance and an avoidance method. For a specific implementation of the avoidance algorithm information, refer to the descriptions in the embodiment in FIG. 3. For example, after access network devices are sorted based on transmit powers of the access network devices, an access network device that needs to perform avoidance may be selected, and then a power is correspondingly reduced or a frequency band is correspondingly changed, or a power of an access network device that may cause interference to the satellite performing a first service may be reduced based on a weight.

In another implementation method, the NEF network element obtains the avoidance algorithm information from a UDM network element or a UDR network element.

Step 603: The NEF network element sends a request message to an access network device. Correspondingly, the access network device receives the request message.

The request message is used to request to obtain interference calculation information of the access network device.

Specifically, the NEF network element sends the request message to the access network device through an AMF network element.

Step 604: The access network device sends the interference calculation information of the access network device to the NEF network element. Correspondingly, the NEF network element receives the interference calculation information of the access network device.

Specifically, the access network device sends the interference calculation information of the access network device to the NEF network element through the AMF network element. For specific content of the interference calculation information of the access network device, refer to the descriptions in the embodiment in FIG. 3.

There may be one or more access network devices in step 603 and step 604.

Step 605: The NEF network element determines, based on ephemeris information of the satellite and service information of the first service on the satellite, at least one access network device that uses a frequency band overlapping with a frequency band used by the satellite to perform the first service.

Step 605 is the same as step 301 in the foregoing embodiment in FIG. 3. Refer to the foregoing descriptions.

Step 606: The NEF network element determines one or more of the at least one access network device.

The NEF network element determines an interference value of each of the at least one access network device to the satellite based on interference calculation information of the at least one access network device and the interference calculation information of the satellite. Then, the NEF network element determines an aggregate interference value of the at least one access network device to the satellite based on the interference value of each of the at least one access network device to the satellite. If the aggregate interference value is greater than a first threshold, the NEF network element selects one or more access network devices from the at least one access network device based on the avoidance algorithm information. After a transmit power of the one or more access network devices is adjusted, the aggregate interference value of the at least one access network device to the satellite is less than or equal to the first threshold.

Step 607: The NEF network element sends indication information to the one or more access network devices. Correspondingly, the one or more access network devices receive the indication information.

The indication information indicates to reduce interference to the satellite or indicates to avoid the satellite, to enable a first aggregate interference value of the at least one access network device to the satellite to be less than or equal to the first threshold.

For a specific implementation of step 607, refer to step 302 in the embodiment in FIG. 3.

For beneficial effects of the embodiment in FIG. 6, refer to the beneficial effects of the embodiment in FIG. 3. Details are not described again.

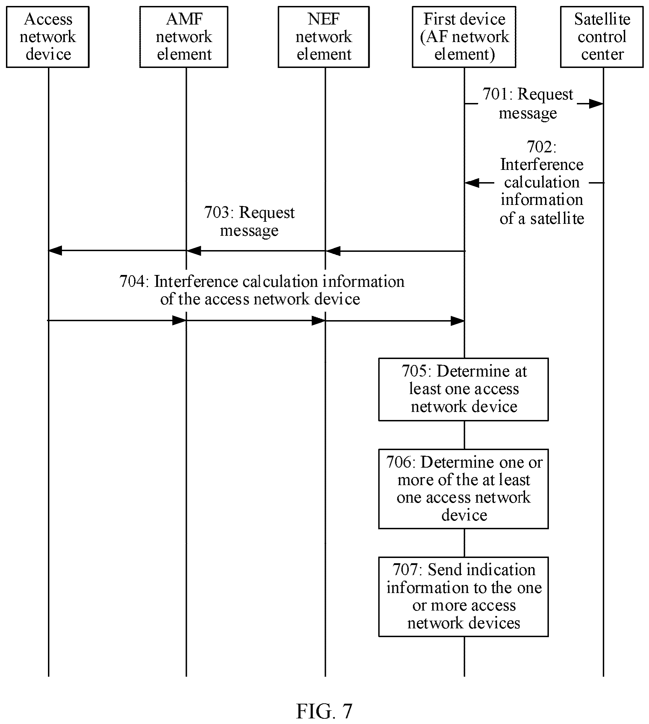

FIG. 7 is a schematic flowchart of a communication method according to an embodiment of this application. In the embodiment in FIG. 7, a first device is an AF network element, that is, the AF network element is used as the first device. The method includes the following steps.

Step 701: The AF network element sends a request message to a satellite control center. Correspondingly, the satellite control center receives the request message.

The request message includes identification information of a satellite, and the request message is used to request to obtain interference calculation information of the satellite.

Step 702: The satellite control center sends the interference calculation information of the satellite to the AF network element. Correspondingly, the AF network element receives the interference calculation information of the satellite.

For specific content of the interference calculation information of the satellite, refer to the descriptions in the embodiment in FIG. 3.

In an implementation method, in step 702, the satellite control center further sends avoidance algorithm information to the AF network element, and the avoidance algorithm information indicates to select an access network device for avoidance and an avoidance method. For a specific implementation of the avoidance algorithm information, refer to the descriptions in the embodiment in FIG. 3. For example, after access network devices are sorted based on transmit powers of the access network devices, an access network device that needs to perform avoidance may be selected, and then a power is correspondingly reduced or a frequency band is correspondingly changed, or a power of an access network device that may cause interference to the satellite performing a first service may be reduced based on a weight.

In another implementation method, the AF network element obtains the avoidance algorithm information from a UDM network element or a UDR network element.

Step 703: The AF network element sends a request message to an access network device. Correspondingly, the access network device receives the request message.

The request message is used to request to obtain interference calculation information of the access network device.

Specifically, the AF network element sends the request message to the access network device through an NEF network element and an AMF network element.

Step 704: The access network device sends the interference calculation information of the access network device to the AF network element. Correspondingly, the AF network element receives the interference calculation information of the access network device.

Specifically, the access network device sends the interference calculation information of the access network device to the AF network element through the AMF network element and the NEF network element. For specific content of the interference calculation information of the access network device, refer to the descriptions in the embodiment in FIG. 3.

There may be one or more access network devices in step 703 and step 704.

Step 705: The AF network element determines, based on ephemeris information of the satellite and service information of the first service on the satellite, at least one access network device that uses a frequency band overlapping with a frequency band used by the satellite to perform the first service.

Step 705 is the same as step 701 in the foregoing embodiment in FIG. 3. Refer to the foregoing descriptions.

Step 706: The AF network element determines one or more of the at least one access network device.

The AF network element determines an interference value of each of the at least one access network device to the satellite based on interference calculation information of the at least one access network device and the interference calculation information of the satellite. Then, the AF network element determines an aggregate interference value of the at least one access network device to the satellite based on the interference value of each of the at least one access network device to the satellite. If the aggregate interference value is greater than a first threshold, the AF network element selects one or more access network devices from the at least one access network device based on the avoidance algorithm information. After a transmit power of the one or more access network devices is adjusted, the aggregate interference value of the at least one access network device to the satellite is less than or equal to the first threshold.

Step 707: The AF network element sends indication information to the one or more access network devices. Correspondingly, the one or more access network devices receive the indication information.

The indication information indicates to reduce interference to the satellite or indicates to avoid the satellite, to enable a first aggregate interference value of the at least one access network device to the satellite to be less than or equal to the first threshold.

For a specific implementation of step 707, refer to step 302 in the embodiment in FIG. 3.

For beneficial effects of the embodiment in FIG. 7, refer to the beneficial effects of the embodiment in FIG. 3. Details are not described again.

It may be understood that, to implement the functions in the foregoing embodiments, the first device includes corresponding hardware structures and/or software modules for performing the functions. A person skilled in the art should be readily aware that, with reference to units and method steps in the examples described in embodiments disclosed in this application, this application can be implemented by hardware or a combination of hardware and computer software. Whether a function is performed by hardware or hardware driven by computer software depends on a particular application scenario and a design constraint condition of the technical solutions.

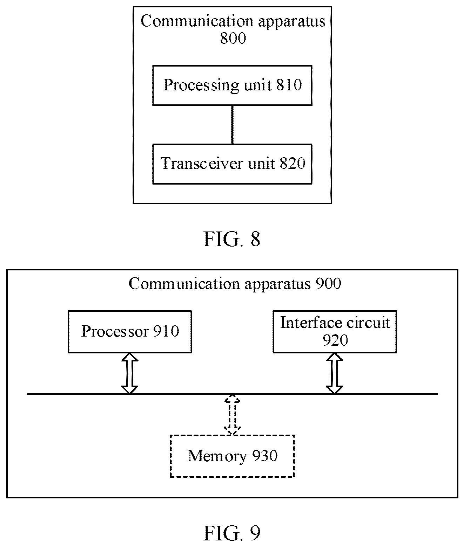

FIG. 8 and FIG. 9 are diagrams of structures of possible communication apparatuses according to embodiments of this application. These communication apparatuses may be configured to implement functions of the first device in the foregoing method embodiments, and therefore can also achieve beneficial effects of the foregoing method embodiments. In embodiments of this application, the communication apparatus may be the first device, or may be a module (for example, a chip) used in the first device.

The communication apparatus 800 shown in FIG. 8 includes a processing unit 810 and a transceiver unit 820. The communication apparatus 800 is configured to implement the functions of the first device in the method embodiments shown in FIG. 3 and FIG. 5 to FIG. 7.

When the communication apparatus 800 is configured to implement the functions of the first device in the foregoing method embodiments, the processing unit 810 is configured to determine, based on ephemeris information of a satellite and service information of a first service on the satellite, at least one access network device that uses a frequency band overlapping with a frequency band used by the satellite to perform the first service. The transceiver unit 820 is configured to send indication information to one or more of the at least one access network device, where the indication information indicates to reduce interference to the satellite, to enable a first aggregate interference value of the at least one access network device to the satellite to be less than or equal to a first threshold.

In a possible implementation method, the processing unit 810 is further configured to determine, before the transceiver unit 820 sends the indication information to the one or more of the at least one access network device, that a second aggregate interference value of the at least one access network device to the satellite is greater than the first threshold.

In a possible implementation method, the processing unit 810 is further configured to: determine an interference value of each of the at least one access network device to the satellite based on interference calculation information of the at least one access network device and interference calculation information of the satellite; and determine the second aggregate interference value based on the interference value of each of the at least one access network device to the satellite.

In a possible implementation method, the transceiver unit 820 is further configured to obtain the interference calculation information of the satellite from a satellite control center.

In a possible implementation method, the transceiver unit 820 is further configured to obtain the interference calculation information of the at least one access network device from the at least one access network device.

In a possible implementation method, the interference calculation information of the satellite includes one or more of the following information: an antenna receive gain of the satellite, propagation loss information of the satellite, or an antenna polarization manner of the satellite.

In a possible implementation method, the interference calculation information of the at least one access network device includes one or more of the following information: an antenna polarization manner of the at least one access network device, an antenna transmit power of the at least one access network device, or an antenna transmit gain of the at least one access network device.

In a possible implementation method, the service information includes location information and/or time information corresponding to the first service, where the location information indicates a geographical range for performing the first service, and the time information indicates a time range for performing the first service.

In a possible implementation method, the one or more access network devices include a first access network device, and the indication information specifically indicates the first access network device to reduce a transmit power.

In a possible implementation method, the one or more access network devices include a second access network device, and the indication information specifically indicates the second access network device to change a used frequency band.

In a possible implementation method, the one or more access network devices include a third access network device, and the indication information specifically indicates the third access network device to stop working.

For more detailed descriptions about the processing unit 810 and the transceiver unit 820, directly refer to related descriptions in the method embodiments in FIG. 3 and FIG. 5 to FIG. 7. Details are not described herein again.

The communication apparatus 900 shown in FIG. 9 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, store input data needed by the processor 910 to run the instructions, or store data generated after the processor 910 runs the instructions.

When the communication apparatus 900 is configured to implement the methods shown in FIG. 3 and FIG. 5 to FIG. 7, the processor 910 is configured to implement functions of the processing unit 810, and the interface circuit 920 is configured to implement functions of the transceiver unit 820.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in an access network device or a terminal device. Certainly, the processor and the storage medium may alternatively exist in the access network device or the terminal device as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer programs or the instructions are loaded and executed on a computer, all or some of the procedures or functions according to embodiments of this application are performed. The computer may be a general-purpose computer, a dedicated computer, a computer network, an access network device, a terminal device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between the associated objects. In the formula in this application, the character "/" indicates a "division" relationship between the associated objects.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, comprising:

    determining, based on ephemeris information of a satellite and service information of a first service on the satellite, at least one access network device that uses a frequency band overlapping with a frequency band used by the satellite to perform the first service; and
    sending indication information to one or more of the at least one access network device, wherein the indication information indicates to reduce interference to the satellite, to enable a first aggregate interference value of the at least one access network device to the satellite to be less than or equal to a first threshold.

2. The method according to claim 1, wherein before sending the indication information to the one or more of the at least one access network device, the method further comprises:
    determining that a second aggregate interference value of the at least one access network device to the satellite is greater than the first threshold.

3. The method according to claim 2, wherein the method further comprises:

    determining an interference value of each of the at least one access network device to the satellite based on interference calculation information of the at least one access network device and interference calculation information of the satellite; and
    determining the second aggregate interference value based on the interference value of each of the at least one access network device to the satellite.

4. The method according to claim 3, wherein the method further comprises:
    obtaining the interference calculation information of the satellite from a satellite control center.

5. The method according to claim 3 or 4, wherein the method further comprises:
    obtaining the interference calculation information of the at least one access network device from the at least one access network device.

6. The method according to any one of claims 3 to 5, wherein the interference calculation information of the satellite comprises one or more of the following information:
    an antenna receive gain of the satellite, propagation loss information of the satellite, or an antenna polarization manner of the satellite.

7. The method according to any one of claims 3 to 6, wherein the interference calculation information of the at least one access network device comprises one or more of the following information:
    an antenna polarization manner of the at least one access network device, an antenna transmit power of the at least one access network device, or an antenna transmit gain of the at least one access network device.

8. The method according to any one of claims 1 to 7, wherein the service information comprises location information and/or time information corresponding to the first service; wherein
    the location information indicates a geographical range for performing the first service, and the time information indicates a time range for performing the first service.

9. The method according to any one of claims 1 to 8, wherein the one or more access network devices comprise a first access network device, and the indication information specifically indicates the first access network device to reduce a transmit power.

10. The method according to any one of claims 1 to 8, wherein the one or more access network devices comprise a second access network device, and the indication information specifically indicates the second access network device to change a used frequency band.

11. The method according to any one of claims 1 to 8, wherein the one or more access network devices comprise a third access network device, and the indication information specifically indicates the third access network device to stop working.

12. A communication apparatus, comprising a module configured to perform the method according to any one of claims 1 to 11.

13. A computer-readable storage medium, wherein the storage medium stores a computer program or instructions, and when the computer program or the instructions are executed by a communication apparatus, the method according to any one of claims 1 to 11 is implemented.

14. A communication system, comprising a first device and one or more access network devices, wherein the first device is configured to: determine, based on ephemeris information of a satellite and service information of a first service on the satellite, at least one access network device that uses a frequency band overlapping with a frequency band used by the satellite to perform the first service; and send indication information to one or more of the at least one access network device, wherein the indication information indicates to reduce interference to the satellite, to enable a first aggregate interference value of the at least one access network device to the satellite to be less than or equal to a first threshold; and the one or more access network devices are configured to receive the indication information.

FIG. 1

FIG. 2(a)

FIG. 2(b)

First
device

Access network
device

301: Determine at
least one access
network device

302: Indication information ⟶

FIG. 3

Signal transmitted
from a satellite

Interference signal of
a ground access
network device

FIG. 4

| Access network device | AMF network element | First device (CCF network element) | NEF network element | Satellite control center |
|---|---|---|---|---|

501: Request message

502: Interference calculation information of a satellite

503: Request message

504: Interference calculation information of the access network device

505: Determine at least one access network device

506: Determine one or more of the at least one access network device

507: Send indication information to the one or more access network devices

FIG. 5

FIG. 6

| Access network device | AMF network element | NEF network element | First device (AF network element) | Satellite control center |
|---|---|---|---|---|

701: Request message

702: Interference calculation information of a satellite

703: Request message

704: Interference calculation information of the access network device

705: Determine at least one access network device

706: Determine one or more of the at least one access network device

707: Send indication information to the one or more access network devices

FIG. 7

Communication apparatus
800

Processing unit 810

Transceiver unit 820

FIG. 8

Communication apparatus 900

Processor 910

Interface circuit
920

Memory 930

FIG. 9

## INTERNATIONAL SEARCH REPORT

| International application No. |
|---|
| **PCT/CN2024/080373** |

| A. | CLASSIFICATION OF SUBJECT MATTER |
|---|---|
| | H04B7/185(2006.01)i |

According to International Patent Classification (IPC) or to both national classification and IPC

| B. | FIELDS SEARCHED |
|---|---|

Minimum documentation searched (classification system followed by classification symbols)

    IPC:H04B

Documentation searched other than minimum documentation to the extent that such documents are included in the fields searched

Electronic data base consulted during the international search (name of data base and, where practicable, search terms used)

    CNABS: CNTXT; VEN; WOTXT; USTXT; EPTXT; CNKI; IEEE; 3GPP: 卫星, 星历, 业务, 频段, 频率, 频谱, 地面站, 地球站, 基站, 接入, 等于, 公用, 共用, 交集, 相等, 相同, 一样, 一致, 干扰, 噪声, 减少, 降低, 抑制, satellite, ephemeris, business, frequency, spectrum, access, AP, base station, access point, earth station, ground station, common, consistent, equal, equivalent, same, interference, noise, decrease, inhibition, restrain, suppression

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 110224739 A (CASIC SPACE ENGINEERING DEVELOPMENT CO., LTD.) 10 September 2019 (2019-09-10)<br>    description, paragraphs [0028]-[0051], and figures 1-2 | 1-14 |
| A | CN 103560856 A (BEIJING UNIVERSITY OF POSTS AND TELECOMMUNICATIONS) 05 February 2014 (2014-02-05)<br>    entire document | 1-14 |
| A | CN 115396053 A (ZHEJIANG SHIKONG DAOYU TECHNOLOGY CO., LTD. et al.) 25 November 2022 (2022-11-25)<br>    entire document | 1-14 |
| A | US 2003207684 A1 (HUGHES ELECTRONICS CORP.) 06 November 2003 (2003-11-06)<br>    entire document | 1-14 |
| A | US 2014112241 A1 (THALES SA.) 24 April 2014 (2014-04-24)<br>    entire document | 1-14 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **09 April 2024** | **16 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/080373** |

| Patent document cited in search report | | | Publication date (day/month/year) | Patent family member(s) | | | Publication date (day/month/year) |
| --- | --- | --- | --- | --- | --- | --- | --- |
| CN | 110224739 | A | 10 September 2019 | None | | | |
| CN | 103560856 | A | 05 February 2014 | CN | 103560856 | B | 31 May 2017 |
| CN | 115396053 | A | 25 November 2022 | None | | | |
| US | 2003207684 | A1 | 06 November 2003 | US | 6708029 | B2 | 16 March 2004 |
| US | 2014112241 | A1 | 24 April 2014 | FR | 2997255 | A1 | 25 April 2014 |
| | | | | FR | 2997255 | B1 | 26 December 2014 |
| | | | | EP | 2723002 | A2 | 23 April 2014 |
| | | | | EP | 2723002 | A3 | 22 November 2017 |
| | | | | EP | 2723002 | B1 | 21 November 2018 |
| | | | | ES | 2710458 | T3 | 25 April 2019 |
| | | | | US | 9252869 | B2 | 02 February 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310247194